# EUROPEAN PATENT SPECIFICATION

(11) **EP 2 339 897 B1**
(45) Date of publication and mention of the grant of the patent: **31.01.2018**
(21) Application number: 10195982.3
(22) Date of filing: 20.12.2010
(51) Int. Cl.: H05B 41/288

(54) **HIGH PRESSURE DISCHARGE LAMP LIGHTING DEVICE AND ILLUMINATION FIXTURE USING THE SAME**
BELEUCHTUNGSVORRICHTUNG FÜR EINE HOCHDRUCKENTLADELAMPE UND BELEUCHTUNGSHALTERUNG DAMIT
DISPOSITIF D'ÉCLAIRAGE D'UNE LAMPE DE DÉCHARGE À HAUTE PRESSION ET APPAREIL D'ÉCLAIRAGE L'UTILISANT

(30) Priority: 22.12.2009 JP 2009291287
(43) Date of publication of application: 29.06.2011
(73) Proprietor: Panasonic Intellectual Property Management Co., Ltd., Osaka-shi, Osaka 540-6207 (JP)
(72) Inventor: Yamahara, Daisuke, Shijonawate Osaka (JP); Matsuzaki, Nobutoshi, Nevagawa Osaka (JP)
(74) Representative: Rüger, Barthelt & Abel

(56) References cited:
- WO-A1-2009/145184
- JP-A- 2009 289 480
- US-A1- 2005 035 724
- US-A1- 2006 279 230

## Description

### [Field of the Invention]

The present invention relates to a high pressure discharge lamp lighting device and an illumination fixture using the device.

### [Background Art]

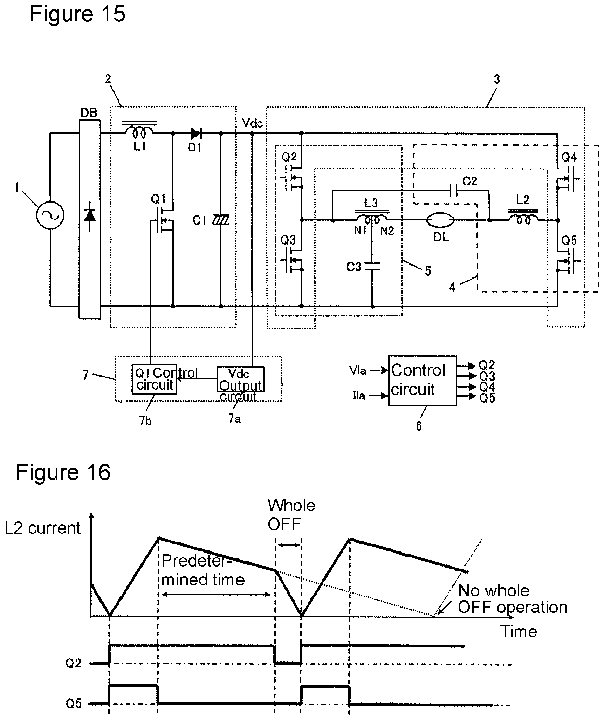

Fig. 15 shows an example of an electronic high pressure discharge lamp lighting device. This high pressure discharge lamp lighting device is formed of a rectifier DB connected to a commercial AC power source 1 to rectify an AC voltage, a DC power circuit 2 that receives an input of a pulsating voltage rectified by the rectifier DB and outputs a DC voltage Vdc, a full bridge circuit 3 that converts the DC voltage Vdc into a rectangular wave AC voltage and applies the AC voltage to a high-pressure discharge lamp DL, a starting circuit 5 that generates a high voltage for starting and restarting of the high-pressure discharge lamp DL, a control circuit 6 that controls switching elements Q2 to Q5 of the full bridge circuit 3 and a control circuit 7 that controls a switching element Q1 of the DC power circuit 2. The control circuit 7 is formed of a Vdc detecting circuit 7a that detects an output voltage Vdc of the DC power circuit 2 and a Q1 control circuit 7b that controls the switching element Q1 according to a detection result of the Vdc detecting circuit 7a.

The full bridge circuit 3 supplies a high voltage for starting to the high-pressure discharge lamp DL by, upon starting, alternately turning on the switching elements Q2, Q3 at high frequencies of a few dozens to a few hundreds of kHz around a resonance frequency of the resonance starting circuit 5 or a frequency substantially equal to the resonance frequency divided by an integer. The resonance starting circuit 5 is formed of a resonance step-up circuit including a transformer L3 connected between one end of the high-pressure discharge lamp DL and a connection point of the switching elements Q2, Q3, and a capacitor C3 introduced between an intermediate tap of the transformer L3 and a ground.

The control circuit 6 controls the switching elements Q2 to Q5 of the full bridge circuit 3 so as to detect a lamp voltage V1a and a lamp current I1a of the high-pressure discharge lamp DL by a detecting part not shown, and, in a stable lighting state, supply a desired current or voltage to the high-pressure discharge lamp DL according to the detection result. This control circuit 6 includes, for example, a microcomputer. The discharge lamp DL is a high-intensity high-pressure discharge lamp (HID lamp) such as a metal halide lamp or a high-pressure mercury lamp.

Upon receipt of the commercial AC power source 1, the control circuit 7 turns on/off the switching element Q1 at around a few dozens of kHz and properly controls a pulse width according to the DC voltage Vdc, so that the DC power circuit 2 keeps the DC voltage Vdc at a predetermined value during both of a non-lighting period when the high-pressure discharge lamp DL is not lighted and a lighting period when the high-pressure discharge lamp DL is lighted. The DC power circuit 2 also functions to improve an input power factor from the commercial AC power source 1 and suppress an input current distortion.

When the DC voltage Vdc reaches the predetermined value, the full bridge circuit 3 starts its operation. At this time, the high-pressure discharge lamp DL is in a non-lighting state, that is, an opened state and an equivalent impedance is in a high impedance state approaching infinity. At this time, the full bridge circuit 3 starts its operation in a starting mode for starting the high-pressure discharge lamp DL and alternately switches between a state where the switching elements Q2, Q5 are turned on and a state where the switching elements Q3, Q4 are turned on at a predetermined frequency f0 (a high frequency around a few hundreds of kHz). The frequency f0 is a frequency that is close to a resonance frequency fr of a series resonance circuit formed of a primary winding N1 of the transformer L3 and the capacitor C3 (or the resonance frequency divided by an integer) and a sinusoidal high voltage is generated in the primary winding N1. The sinusoidal high voltage generated in the primary winding N1 is stepped up depending on a turn ratio of the primary winding N1 of transformer L3 to a secondary winding N2, and the stepped up voltage is applied to the high-pressure discharge lamp DL through a capacitor C2. Whereby, the high-pressure discharge lamp DL breaks down and is started.

When being started, the high-pressure discharge lamp DL is put into a low impedance state close to short-circuit, and a voltage between both ends V1a of the high-pressure discharge lamp DL is lowered to about 0V. When the voltage between both ends V1a of the high-pressure discharge lamp DL falls below a lighting determination voltage threshold, the control circuit 6 determines that the high-pressure discharge lamp DL is lighted and switches the operation of the full bridge circuit 3 to a lighting mode for stably lighting the high-pressure discharge lamp DL.

In the full bridge circuit 3 in the lighting mode, the switching elements Q2, Q3 are alternately turned on/off at a first frequency fa (a low frequency of about a few hundreds of Hz). Meanwhile, for the switching elements Q4, Q5, an operation of turning on/off the switching element Q5 at a second frequency fb (a high frequency of about a dozens of kHz) in a period when the switching element Q2 is turned on and turning on/off the switching element Q5 at the second frequency fb (a high frequency of about a dozens of kHz) in a period when the switching element Q3 is turned on is repeated.

By this polarity-reversal step-down chopper operation, the rectangular wave AC voltage having the first frequency fa is applied to the high-pressure discharge lamp DL. At this time, the capacitor C2 and an inductor L2 function as a filter circuit of a step-down chopper circuit 4 and antiparallel diodes built in the switching elements Q4, Q5 function as regenerated current passing diodes of the step-down chopper circuit 4. In the high-pressure discharge lamp DL, a voltage between both ends of the lamp is low immediately after start and as the inside of the lamp has a higher temperature and a higher pressure, the voltage between both ends of the lamp is increased and then reaches a rated value, leading to a stable lighting state.

In such a lighting device, as shown in Fig. 16, it is known to perform a control operation of turning off the switching element Q2 that forms a pair with the switching element Q5 after a lapse of a predetermined time in the case where a current flowing to the inductor L2 does not lower to zero after the switching element Q5 forming the step-down chopper circuit 4 is turned off (refer to claim 3 of US. Patent No. 6,426,597. This control operation, that is, a whole OFF state where the switching element Q2 is turned off after a lapse of the predetermined time after the switching element Q5 is turned off in the case where the current flowing to the inductor L2 of the step-down chopper circuit 4 does not reach zero (hereinafter a state where all of the switching elements Q2, Q3, Q4, Q5 are turned off is referred to as the whole OFF state) is effective in a state where the lamp voltage V1a in an initial lighting period of the lamp is low.

That is, as described in US. Patent No. 6,426,597, when the control operation (zero-cross operation) is performed in the state where the lamp voltage V1a is low in the initial lighting period of the high-pressure discharge lamp DL as in a normal stable lighting state, it takes considerable time that the current flowing to the inductor L2 of the step-down chopper circuit 4 reaches zero after the switching element Q5 is turned off. Performing the zero-cross operation even in such a state results in an operation having a long OFF time as shown by a broken line in Fig. 16, thereby reducing an average lamp current.

JP 2009 289480 A shows a high-pressure discharge lamp lighting device according to the preamble of claim 1 including a DC power source part, an output part, a control part and an abnormality detecting part. The output part converts the direct current of the DC power source part into a rectangular wave alternating current reversed in polarity at a predetermined frequency and supplying it to the high-pressure discharge lamp. The output part contains a full bridge circuit with four switching elements. When an instantaneous voltage drop is detected by the abnormality detecting part, the control part shifts from a normal lighting mode to a lighting maintaining mode of controlling the output part. The frequency of the rectangular wave alternating current supplied to the high-pressure discharge lamp is lower in lighting maintaining mode than in the normal lighting mode.

WO 2009/145184 A1 discloses a method for setting a resonance voltage and a high frequency current, wherein an excess current peak is suppressed and fluctuation of a resonance voltage of a resonance section is also suppressed. In a state in which an electrode of the discharge lamp is not uniformly warmed just after ist ignition, a high frequency current flows asymmetrically with respect to zero current value. The resonance voltage and the high-frequency current are finely adjusted in a resonance voltage and high-frequency current setting method.

### [Disclosure of the Invention]

### [Problems to be solved by the Invention]

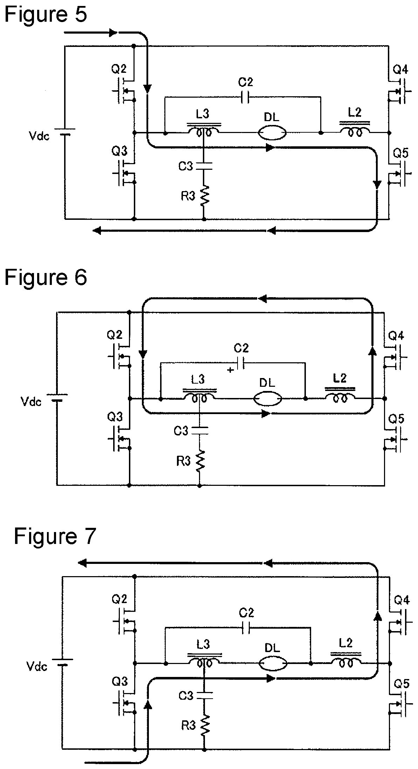

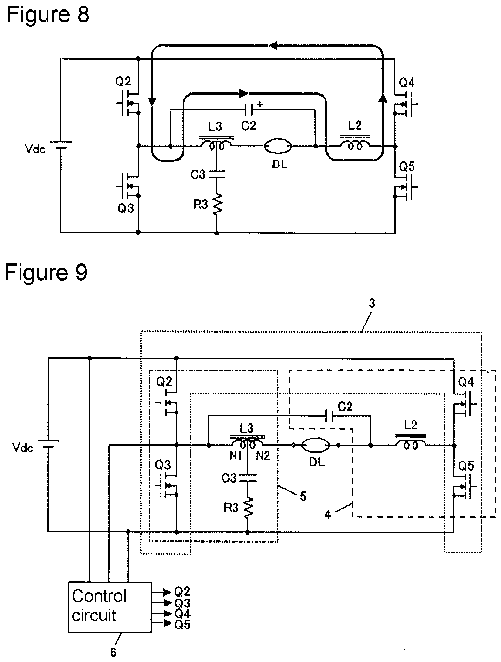

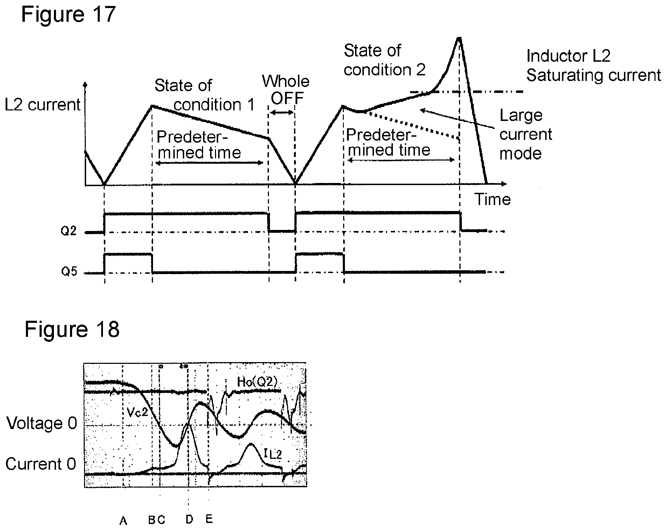

With a circuit configuration shown in Fig. 15, when the high-pressure discharge lamp in an unstable discharge state, such as a lamp at the end of life, is connected, lighting-on/lighting-off can be irregularly repeated. When such an unstable discharge is repeated, a voltage Vc2 of the capacitor C2 connected to the high-pressure discharge lamp DL substantially in parallel may oscillate in a loop formed of the capacitor C2, the high-pressure discharge lamp DL and the transformer L3 or a loop formed of the capacitor C2, the inductor L2 of the step-down chopper circuit 4, a body diode of the switching element Q4 and the switching element Q2. In this case, as shown in Fig. 17, depending on polarity of the voltage Vc2 of the capacitor C2, there occurs a phenomenon that a current of the inductor L2 of the step-down chopper circuit 4, which should decrease after the high-frequency switching element Q5 is turned off in a normal operation, increases conversely. In Fig. 17, a condition 1 is a state shown in Fig. 6, a condition 2 is a state shown in Fig. 8 and the voltage polarity of the capacitor C2 is a reverse polarity.

In US. Patent No. 6, 426, 597, noting only the decrease in the lamp current, a predetermined time from turning-off of the switching element Q5 to turning-off of the switching element Q2 is determined. In this case, because saturation characteristics of the inductor L2 of the commonly-used step-down chopper circuit 4 are designed in a steady operating state, if the current of the inductor L2 of the step-down chopper circuit 4 increases, the inductor L2 of the step-down chopper circuit 4 reaches a saturated state and, as shown in Fig. 8, a large current flows in the loop formed of the capacitor C2, the inductor L2 of the step-down chopper circuit 4, the body diode of the switching element Q4 and the switching element Q2. This causes failures of the high pressure discharge lamp lighting device such as a failure of the switching elements and disconnection of the inductor.

Fig. 18 illustrates waveforms of parts in the case where the large current flows to the inductor L2 of the step-down chopper circuit 4, which is confirmed in an actual device. In this figure, Vc2 is a voltage of the capacitor C2 (100V/div), Ho (Q2) is a control signal voltage of the switching element Q2 (5V/div) and IL2 is a current of the inductor L2 (10A/div). Both of the switching elements Q2, Q5 are turned on at timing A and the switching element Q5 is turned off at timing B. Since the voltage Vc2 of the capacitor C2 becomes zero at timing C and then oscillates toward a negative polarity, the current IL2 of the inductor L2 of the step-down chopper circuit 4 increases. The voltage Vc2 of the capacitor C2 returns from the negative polarity to positive polarity at timing D, and at this time, the current IL2 of the inductor L2 of the step-down chopper circuit 4 reaches a peak. At timing E, the predetermined time elapses and the switching element Q2 is turned off, resulting in the whole OFF state. As apparent from this waveform chart, when the current IL2 flowing to the inductor L2 exceeds a predetermined value (a saturating current shown in Fig. 17), the current IL2 rapidly increases, causing a large stress.

In consideration of the above-mentioned circumstances, the present invention intends to provide a high pressure discharge lamp lighting device capable of preventing a large current from flowing to the inductor of the step-down chopper circuit even when the high-pressure discharge lamp with unstable discharge is connected.

### [Means Adapted to Solve the Problems]

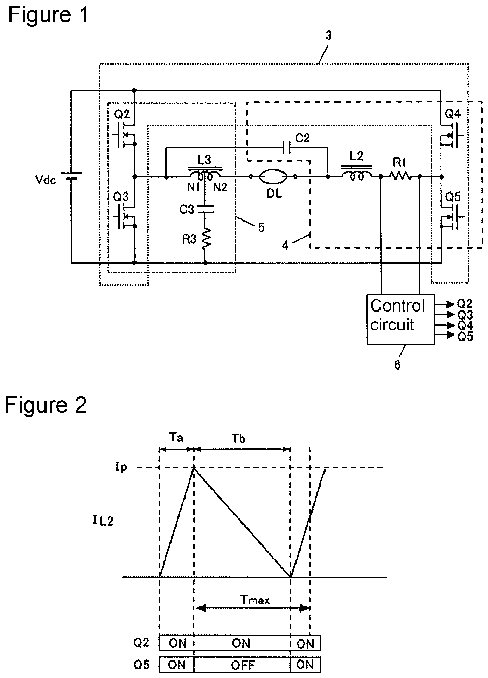

A first aspect of the present invention, to solve the above-mentioned problem, as shown in Fig. 1, is a high pressure discharge lamp lighting device according to claim 1.

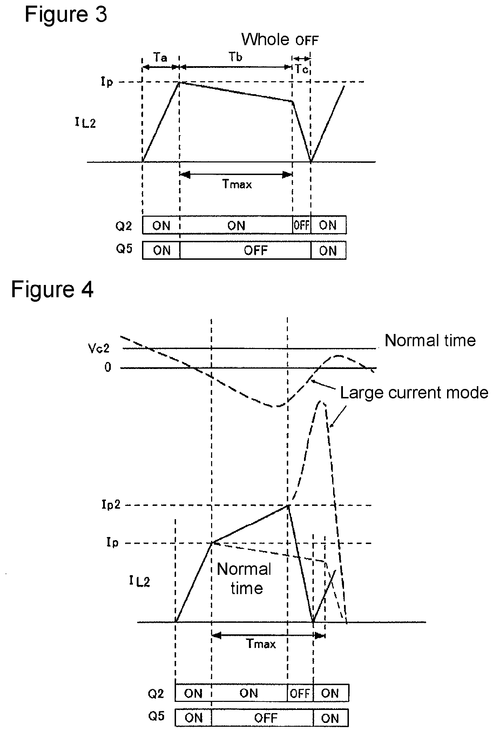

According to a second aspect of the present invention, in the high pressure discharge lamp lighting device as stated in the first aspect of the present invention, the control to turn off the first switching element Q2 in the first state and the second switching element Q3 in the second state according to the current IL2 flowing to the inductor L2 is performed when the current flowing to the inductor L2 becomes equal to or larger than a predetermined value Ip2 as shown in Fig. 4.

According to a third aspect of the present invention, in the high pressure discharge lamp lighting device as stated in the second aspect of the present invention, the predetermined value Ip2 is equal to or smaller than a saturating current of the inductor L2 (refer to Fig. 17).

A fourth aspect of the present invention, in the high pressure discharge lamp lighting device as stated in the third aspect of the present invention, further includes detecting means adapted to detect the current IL2 flowing to the inductor L2 or an equivalent value (Fig. 1, Fig. 9, Fig. 10).

According to a fifth aspect of the present invention, in the high pressure discharge lamp lighting device as stated in the fourth aspect of the present invention, the detecting means is a current detecting resistor R1 (Fig. 1).

According to a sixth aspect of the present invention, in the high pressure discharge lamp lighting device as stated in the fourth aspect of the present invention, the detecting means is detection of a voltage between both ends of the first switching element Q2 in the first state and detection of a voltage between both ends of the second switching element Q3 in the second state (Fig. 9).

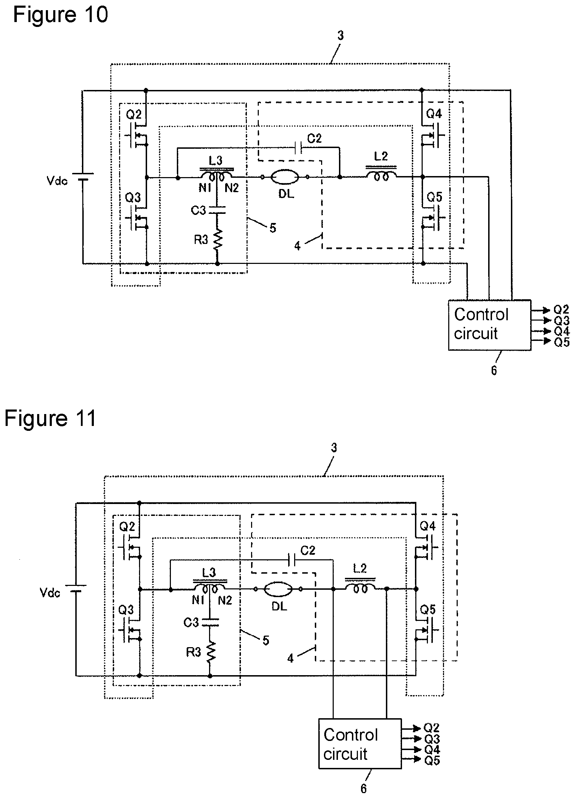

According to a seventh aspect of the present invention, in the high pressure discharge lamp lighting device as stated in the fourth aspect of the present invention, the detecting means is detection of a voltage between both ends of the third switching element Q4 in the first state and detection of a voltage between both ends of the fourth switching element Q5 in the second state (Fig. 10).

According to an eighth aspect of the present invention, in the high pressure discharge lamp lighting device as stated in the first aspect of the present invention, the control to turn off the first switching element Q2 in the first state and the second switching element Q3 in the second state according to the current IL2 flowing to the inductor L2 is performed when an inclination of the current flowing to the inductor L2 becomes equal to or larger than a predetermined value.

A ninth aspect of the present invention, in the high pressure discharge lamp lighting device as stated in the eighth aspect of the present invention, further includes detecting means adapted to detect an inclination of the current flowing to the inductor L2 or an equivalent value (Fig. 11).

According to a tenth aspect of the present invention, in the high pressure discharge lamp lighting device as stated in the ninth aspect of the present invention, the detecting means is detection of a voltage between both ends of the inductor L2 (Fig. 11).

According to an eleventh aspect of the present invention, in the high pressure discharge lamp lighting device as stated in the ninth aspect of the present invention, the detecting means is detection of a voltage between both ends of the capacitor C2 connected to an output terminal in parallel, the output terminal capable of being connected to the high-pressure discharge lamp DL.

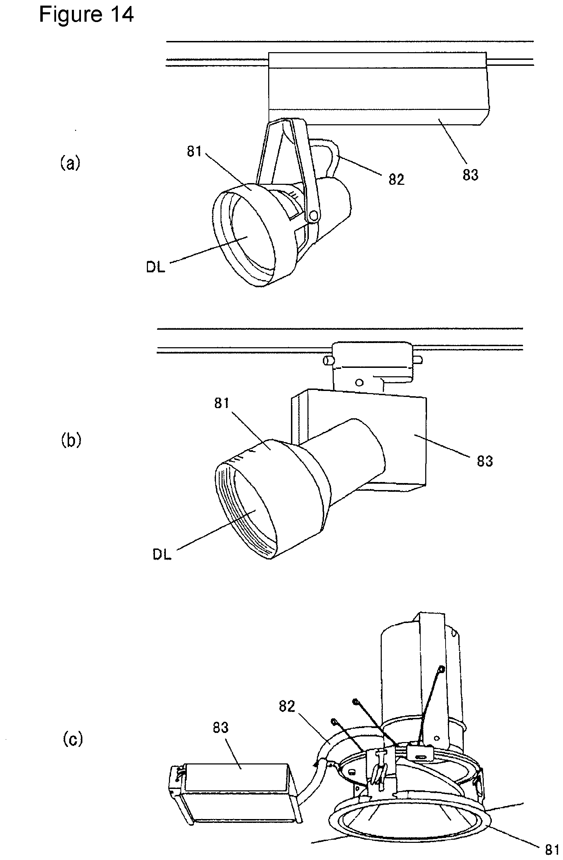

A twelfth aspect of the present invention is an illumination fixture including the high pressure discharge lamp lighting device as stated in any of the first to eleventh aspects of the present invention (Fig. 14).

### [Effect of the Invention]

According to the present invention, in a lighting device for lighting a high-pressure discharge lamp by a polarity reversal step-down chopper circuit with a full-bridge configuration, since it is controlled so that a switching element performing a low-frequency operation is turned off after turning-off of a switching element performing a high frequency operation according to a current flowing to an inductor, even when a high-pressure discharge lamp with unstable discharge is connected as a load, a current is prevented from flowing to the inductor of the step-down circuit, thereby avoiding breakdown of the high pressure discharge lamp lighting device.

### [Brief Description of the Drawings]

[Fig. 1] Fig. 1 is a circuit diagram illustrating a circuit configuration in a first embodiment of the present invention.
[Fig. 2] Fig. 2 is an operational waveform chart at a normal zero-cross operation in the first embodiment of the present invention.
[Fig. 3] Fig. 3 is an operational waveform chart at a low load voltage in the first embodiment of the present invention.
[Fig. 4] Fig. 4 is an operational waveform chart at connection of a defective lamp in the first embodiment of the present invention.
[Fig. 5] Fig. 5 is a circuit diagram for describing a current path from a power source to a load in a first state in the first embodiment of the present invention.
[Fig. 6] Fig. 6 is a circuit diagram for describing a normal path of a regenerated current in the first state in the first embodiment of the present invention.
[Fig. 7] Fig. 7 is a circuit diagram for describing a path of the regenerated current to the poser source in the first state in first embodiment of the present invention.
[Fig. 8] Fig. 8 is a circuit diagram for describing a current path in a large current mode in the first state in the first embodiment of the present invention.
[Fig. 9] Fig. 9 is a circuit diagram illustrating a circuit configuration of a second embodiment of the present invention.
[Fig. 10] Fig. 10 is a circuit diagram illustrating a circuit configuration of a third embodiment of the present invention.
[Fig. 11] Fig. 11 is a circuit diagram illustrating a circuit configuration of a fourth embodiment of the present invention.
[Fig. 12] Fig. 12 is an operational waveform chart at connection of the defective lamp in the fourth embodiment of the present invention.
[Fig. 13] Fig. 13 is a waveform chart illustrating a result of circuit simulation in the fourth embodiment of the present invention.
[Fig. 14] Fig. 14 is a perspective view illustrating an appearance of an illumination fixture in a fifth embodiment of the present invention.
[Fig. 15] Fig. 15 is a circuit diagram of a conventional high pressure discharge lamp lighting device.
[Fig. 16] Fig. 16 is an operational waveform chart in starting at a low load voltage in the conventional example.
[Fig. 17] Fig. 17 is an operational waveform chart at connection of the defective lamp in the conventional example.
[Fig. 18] Fig. 18 is a waveform chart illustrating operational waveforms at connection of the defective lamp in the conventional example, which are measured by an actual device.

### [Best Mode for Carrying out the Invention]

### (First embodiment)

Fig. 1 is a circuit diagram of a first embodiment of the present invention. Drain electrodes of switching elements Q2, Q4 each formed of a MOSFET are connected to a positive electrode of the DC power source Vdc, and source electrodes of switching elements Q3, Q5 each formed of a MOSFET are connected to a negative electrode of the DC power source Vdc. A source electrode of the switching element Q2 and a drain electrode of the switching element Q3 are connected to one end of the capacitor C2 and one end of a primary winding N1 of a transformer L3. A source electrode of the switching element Q4 and a drain electrode of the switching element Q5 are connected to one end of a inductor L2 through a current detecting resistor R1. The other end of the inductor L2 and the other end of the capacitor C2 are connected to one end of a high-pressure discharge lamp DL. The other end of the high-pressure discharge lamp DL is connected to one end of a secondary winding N2 of a transformer L3. The other end of the primary winding N1 of the transformer L3 and the other end of the secondary winding N2 are connected to the negative electrode of the DC power source Vdc through a series circuit formed of a capacitor C3 and a resistor R3. A voltage between both ends of the current detecting resistor R1 is detected by a control circuit 6. The control circuit 6 detects a voltage between both ends V1a of the high-pressure discharge lamp DL by use of a detecting circuit not shown. The switching elements Q2 to Q5 are controlled to be turned on/off according to a control signal outputted from the control circuit 6.

The switching elements Q2 to Q5 constitute a full bridge circuit 3 that reverses the polarity of a DC voltage of the DC power source Vdc and inverts the DC voltage into an AC voltage. The switching elements Q4, Q5, the inductor L2 and the capacitor C2 constitute a step-down chopper circuit 4. The switching elements Q2, Q3, the transformer L3, the capacitor C3 and the resistor R3 constitute a resonance starting circuit 5. Both ends of the high-pressure discharge lamp DL are connected to a lighting device through connecting terminals such as lamp sockets not shown.

Operations of the lighting device in Fig. 1 will be described below. First, in a starting mode before electric breakdown of the high-pressure discharge lamp DL, a state where the switching elements Q2, Q5 are turned on and a state where the switching elements Q3, Q4 are turned on are alternately switched at a predetermined frequency f0 (about a few hundreds of kHz) in a repeated manner. The frequency f0 is a frequency that is close to a resonance frequency fr of a series resonance circuit formed of the primary winding N1 of the transformer L3 and the capacitor C3 (or the resonance frequency divided by and integer) and a sinusoidal high voltage is generated in the primary winding N1. The sinusoidal high voltage generated in the primary winding N1 is stepped up depending on a turn ratio of the primary winding N1 of the transformer L3 to the secondary winding N2 and the stepped-up voltage is applied to the high-pressure discharge lamp DL through the capacitor C2. Whereby, the high-pressure discharge lamp DL breaks down and is started.

When the high-pressure discharge lamp DL is started, the high-pressure discharge lamp DL is put into a low impedance state close to short-circuit and the voltage between both ends V1a of the high-pressure discharge lamp DL is lowered to about 0V. When the voltage between both ends V1a of the high-pressure discharge lamp DL falls below a lighting determination voltage threshold, the control circuit 6 determines that the high-pressure discharge lamp DL is lighted and switches an operation of the full bridge circuit 3 to the lighting mode for stably lighting the high-pressure discharge lamp DL.

In the full bridge circuit 3 in the lighting mode, the switching elements Q2, Q3 are alternately turned on/off at a first frequency fa (a low frequency of about a few hundreds of Hz). Meanwhile, for the switching elements Q4, Q5, an operation of turned on/off the switching element Q5 at a second frequency fb (a high frequency of about a dozens of kHz) in a period when the switching element Q2 is turned on and turning on/off the switching element Q4 at the second frequency fb (a high frequency of about a dozens of kHz) in a period when the switching element Q3 is turned on is repeated. By this polarity-reversal step-down chopper operation, a rectangular wave AC voltage having the first frequency fa is applied to the high-pressure discharge lamp DL.

At this time, the capacitor C2 and the inductor L2 function as a filter circuit of the step-down chopper circuit 4 and antiparallel diodes built in the switching elements Q4, Q5 function as regenerated current passing diodes of the step-down chopper circuit 4. In the high-pressure discharge lamp DL, the voltage between both ends of the lamp V1a is low immediately after start and as an inside of the lamp has a higher temperature and a higher pressure, the voltage between both ends of the lamp V1a is increased and then reaches a rated value, leading to a stable lighting state.

Fig. 2 illustrates an ON/OFF state of the switching element Q5 in a period when the switching element Q2 is turned on in the stable lighting state, and a change of a current IL2 flowing to the inductor L2 of the step-down chopper circuit 4. In the state where both the switching elements Q2, Q5 are turned on, as shown in Fig. 5, a current flows from the positive electrode of the DC power source Vdc through the switching element Q2, the transformer L3, the high-pressure discharge lamp DL, the inductor L2 and the switching element Q5, and the current IL2 flowing to the inductor L2 increases substantially linearly. This current is detected by the current detecting resistor R1. When the detected current IL2 reaches a predetermined peak current Ip, the control circuit 6 turns off the switching element Q5.

Then, an electromotive force occurs in a direction of continuously passing a current to the inductor L2 due to an electromagnetic energy stored in the inductor L2, and as shown in Fig. 6, the current flows from the inductor L2 through a body diode (a backward diode built between drain and source) of the switching element Q4, the switching element Q2, the transformer L3 and the high-pressure discharge lamp DL, and the current IL2 flowing to the inductor L2 decreases substantially linearly. This current is detected by the current detecting resistor R1. When the detected current IL2 becomes zero, the control circuit 6 turns on the switching element Q5. Thereafter, the above-mentioned operations are repeated.

Ripple components in the current IL2 flowing to the inductor L2 of the step-down chopper circuit 4 are removed by a capacitor C1 and its average current becomes a load current I1a flowing to the high-pressure discharge lamp DL. The control circuit 6 determines a target value Ip of the current IL2 flowing to the inductor L2 according to the lamp voltage between both ends V1a so that the proper load current I1a flows to the high-pressure discharge lamp DL, and outputs the control signal to the switching elements Q4, Q5 performing the high frequency operation in the step-down chopper circuit 4. Whereby, a length of a period Ta when the current IL2 of the inductor L2 increases and a length of a period Tb when the current IL2 of the inductor L2 decreases are determined.

As shown in Fig. 2, the zero-cross operation of controlling to turn on the switching element performing the high frequency operation in the step-down chopper circuit 4 (the switching element Q5 in the case where the switching element Q2 is turned on and the switching element Q4 in the case where the switching element Q3 is turned on) at the time when the current IL2 flowing to the inductor L2 returns to zero has an advantage that a switching loss is small.

However, in a period when the lamp voltage between both ends V1a is low, such as an initial lighting period of the high-pressure discharge lamp DL, as shown in Fig. 3 and Fig. 16, the decrease in the current IL2 of the inductor L2 at turning-off of the switching element Q5 takes long time. Thus, a predetermined maximum OFF time Tmax (for example, 25 µs) is previously set and when the predetermined time Tmax elapses after the switching element Q5 is turned off, the switching element Q2 performing the low-frequency operation is turned off. As a result, a period when both the switching elements Q2, Q5 are turned off (whole OFF period Tc) is generated. In this whole OFF period Tc, as shown in Fig. 7, by regenerating energy stored in the inductor L2 to the DC power source Vdc through body diodes of the switching elements Q3, Q4, the current IL2 of the inductor L2 rapidly decreases. This is due to that an inclination of the current IL2 flowing to the inductor L2 is proportional to magnitude of the voltage applied to the inductor L2.

By the regenerated current flowing to the DC power source Vdc in the whole OFF period Tc (refer to Fig. 7), both the switching elements Q2, Q5 are turned on after the current IL2 of the inductor L2 becomes zero, and the current IL2 of the inductor L2 is increased again (refer to Fig. 5). By repeating the above-mentioned operations, the step-down chopper circuit 3 supplies a stable current to the high-pressure discharge lamp DL.

When a chopping operation of the switching element Q5 continues for a certain period, it is switched to the chopping operation of the switching element Q4 performing the high frequency operation. With this polarity, the switching element Q3 becomes the switching element performing the low-frequency operation. Such repeated polarity reversal allows a proper rectangular current to be supplied to the high-pressure discharge lamp DL. The polarity reversal frequency (first frequency fa) is, for example, about 160 Hz.

Although the maximum OFF time Tmax is set as a period from turning-off of the switching element Q5 to the whole OFF operation, it may be set as a period from turning-on of the switching element Q5 to the whole OFF operation.

The operations in the case where a normal lamp is connected have been described. However, at lighting of an unstable lamp such as the lamp at the end of life, there may be case where lighting-on/lighting-off is irregularly repeated, oscillation occurs in a loop including the high-pressure discharge lamp DL and the capacitor C2 connected to the lamp substantially in parallel and thus, a potential of the capacitor C2 oscillates to the reverse polarity to that at normal time. In this case, as shown in Fig. 4, after the switching element Q5 performing the high frequency operation in the step-down chopper circuit 4 is turned off, the current IL2 flowing to the inductor L2 increases, and when the inductor L2 is saturated, a phenomenon that the current further flows (a large current mode) occurs. In the large current mode, as shown in Fig. 8, the current due to the oscillating voltage of the capacitor C2, which has a reverse polarity to that at normal time, is added, resulting in that a large current flows to each of the switching elements Q2, Q4, the inductor L2 and the like, causing stresses to the circuit parts.

To solve such a problem, in the present embodiment, when the current of the inductor L2 becomes a predetermined value Ip2 or more, the switching element Q2 performing the low-frequency operation is turned off to lead to a whole OFF state even if the maximum OFF time Tmax has not elapsed after the switching element Q5 performing the high frequency operation in the step-down chopper circuit 4 is turned off, as shown in Fig. 4, and the regenerated current is passed to the DC power source Vdc as shown in Fig. 7, whereby causing the current IL2 of the inductor L2 to rapidly decrease. By setting the predetermined value Ip2 to a value that is equal to or smaller than a saturating current of the inductor L2, an increase in the current due to saturation of the inductor L2 can be prevented.

In the present embodiment, although the current detecting resistor R1 as a detecting resistor for the current IL2 of the inductor L2 is introduced in series with the inductor L2, the detecting resistor may be installed at any position in the current loop including the switching elements Q4, Q5 performing the high frequency operation, for example, the detecting resistor may be introduced in series with the capacitor C2.

As described above, in the present embodiment, even before the maximum OFF time Tmax elapses after the switching elements Q4, Q5 performing the high frequency operation in the step-down chopper circuit 4 are turned off, when the current of the inductor L2 becomes the predetermined value Ip2 or more, the switching elements Q2, Q3 performing the low-frequency operation are turned off to put the full bridge circuit 3 into the whole OFF state to pass the regenerated current to the DC power source Vdc, thereby preventing a large current from flowing to the inductor L2.

### (Second embodiment)

Fig. 9 is a circuit diagram in a second embodiment of the present invention. Detecting means of the current IL2 flowing to the inductor L2 in the present embodiment is different from that in the first embodiment. In the second embodiment, as shown in Fig. 9, the current IL2 of the inductor L2 is detected by detecting a drain-source voltage of the switching element Q2 or Q3 performing the low-frequency operation. That is, at the chopping operation of the switching element Q5 performing the high frequency operation, in the state where the switching element Q2 performing the low-frequency operation is turned on, a current Ids (Q2) flowing between drain and source of the switching element Q2 is substantially equal to the current IL2 flowing to the inductor L2. While the switching element Q2 is turned on, since a slight ON resistance (a few dozens to a few hundreds of Ω) occurs between the drain and source, a voltage proportional to the flowing current is generated. Using this, a drain-source voltage Vds (Q2) of the switching element Q2 is detected and the current of the inductor L2 is calculated from a detected value.

Specifically, since the current flows in the path shown in Fig. 5 in the period Ta in Fig. 3, the drain-source voltage Vds (Q2) of the switching element Q2 is detected and the current of the inductor L2 is calculated from a detected value. When the detected value reaches a peak value Ip, the control circuit 6 turns off the switching element Q5.

Since the current flows in the path shown in Fig. 6 (or Fig. 8) in the period Tb in Fig. 3, the drain-source voltage Vds (Q2) of the switching element Q2 is detected and the current of the inductor L2 is calculated from a detected value. When the detected value reaches a second peak value Ip2 shown in Fig. 4, the control circuit 6 turns off both the switching elements Q2, Q5.

Since a current flows to the body diode of the switching element Q3 in the period Tc in Fig. 3 as shown in Fig. 7, zero-cross is determined at the time when the current becomes zero and the control circuit 6 turns on both the switching elements Q2, Q5.

Next, with a polarity where the switching element Q4 performs the chopping operation (high frequency operation), a drain-source voltage Vds (Q3) of the switching element Q3 performing the low-frequency operation is detected and the current IL2 of the inductor L2 is calculated. In the period when both the switching elements Q3, Q4 are turned on, when the current IL2 of the inductor L2 reaches a negative peak value (-Ip), the switching element Q4 is turned off. In the period when the switching element Q3 is turned on and the switching element Q4 is turned off, when the current IL2 of the inductor L2 reaches a second negative peak value (-Ip2), the switching element Q3 is turned off. In the case of the whole OFF period, zero-cross is determined at the time when the current flowing to the body diode of the switching element Q2 becomes zero and the control circuit 6 turns on both the switching elements Q3, Q4.

In the present embodiment, since there is no need to add the current detecting resistor R1 in series with the inductor L2 as in the first embodiment, losses in the circuit can be reduced as compared to the first embodiment.

### (Third embodiment)

Fig. 10 is a circuit diagram in a third embodiment of the present invention. Detecting means of the current IL2 flowing to the inductor L2 in the present embodiment is different from that in the first and second embodiments. In the third embodiment, as shown in Fig. 10, the current IL2 of the inductor L2 is detected by detecting the drain-source voltage of the switching element Q4 or Q5 performing the high frequency operation.

First, with a polarity where the switching element Q5 performs a chopping operation (high frequency operation), in the period Ta when both the switching elements Q2, Q5 are turned on, as shown in Fig. 5, a current Ids (Q5) flowing between drain and source of the switching element Q5 is substantially equal to the current IL2 flowing to the inductor L2. When the switching element Q5 is turned on, since a slight ON resistance (a few dozens to a few hundreds of Ω) occurs between the drain and source, a voltage proportional to the flowing current is generated. Using this, a drain-source voltage Vds (Q5) of the switching element Q5 is detected, and the current IL2 of the inductor L2 is calculated from a detected value. When the calculated current IL2 of the inductor L2 reaches the peak value Ip, the control circuit 6 turns off the switching element Q5.

When the switching element Q5 is turned off, as shown in Fig. 6, the current IL2 flowing to the inductor L2 is substantially equal to the current flowing to the body diode between the drain and the source of the switching element Q4. At this time, a voltage proportional to the flowing current occurs between the drain and the source of the switching element Q4. Using this, when the switching element Q5 is turned off, a drain-source voltage Vds (Q4) of the switching element Q4 is detected and the current IL2 of the inductor L2 is calculated from a detected value. As shown in Fig. 4 and Fig. 8, in the case where the voltage Vc2 of the capacitor C2 oscillates toward the reverse polarity to cause the large current mode, at the time when the current IL2 of the inductor L2 reaches the second peak value Ip2, the control circuit 6 turns off both the switching elements Q2, Q5. This prevents magnetic saturation of the inductor L2.

In the whole OFF period, as shown in Fig. 7, the regenerated current flows to the DC power source Vdc. The control circuit 6 monitors the drain-source voltage of the switching element Q4 and turns on both the switching elements Q2, Q5 when determining that the regenerated current returns to zero, and then, returns to the operation in Fig. 5. Whereby, the zero-cross operation can be achieved without making the current of the inductor L2 excessive.

Similarly, with the polarity where the switching element Q4 performs the chopping operation (high frequency operation), when the switching element Q4 is turned on, the current IL2 of the inductor L2 is calculated by detecting the drain-source voltage Vds (Q4) of the switching element Q4, and when the switching element Q4 is turned off, the current IL2 of the inductor L2 is calculated by detecting the drain-source voltage Vds (Q5) of the switching element Q5.

In the third embodiment, since there is no need to add the current detecting resistor R1 in series with the inductor L2 as in the first embodiment, losses in the circuit can be reduced as compared to the first embodiment.

### (Fourth embodiment)

Fig. 11 is a circuit diagram in a fourth embodiment of the present invention. A circuit configuration in the present embodiment is different from that in the first embodiment in that the control circuit 6 detects a voltage between both end of the inductor L2. In the present embodiment, even before a maximum OFF time Tmax elapses after the switching element Q4 or Q5 performing the high frequency operation is turned off, when an inclination of a current of the inductor L2 becomes equal to or larger than a predetermined value, the switching element Q2 or Q3 performing a low-frequency operation is turned off to cause a whole OFF state and the regenerated current is passed to the DC power source Vdc, thereby preventing a large current from flowing to the inductor L2.

As shown in the period Tb in Figs. 2 and 3, at the normal operation, after the switching element Q5 performing a chopping operation (high frequency operation) is turned off, the current IL2 of the inductor L2 tends to be decreased, and the inclination di/dt is smaller than 0.

However, as mentioned as the problem, when a unstable lamp such as the lamp at the end of life is lighted, lighting-on/lighting off of the lamp is irregularly repeated, and the high-pressure discharge lamp DL, the capacitor C2 connected to the lamp DL substantially in parallel and the inductor L2 serially connected to the lamp DL oscillate, so that the voltage Vc2 of the capacitor C2 may oscillate to the reverse polarity to that at the normal time as shown in Figs. 4 and 8. In this case, even when the switching element Q5 is turned off, as shown in Fig. 4, the current IL2 flowing to the inductor L2 may increase, and the inclination di/dt may become larger than 0, and then, the current of the inductor L2 exceeds the magnetic saturating current, causing a large current.

In the present embodiment, when the switching element Q4 or Q5 performing the high frequency operation in the step-down chopper circuit 4 is turned off, the inclination di/dt of the current IL2 of the inductor L2 is detected. When the detected inclination di/dt of the current becomes equal to or larger than a predetermined threshold, even before the predetermined time Tmax elapses, the switching element Q2 or Q3 performing the low-frequency operation is turned off to cause the whole OFF state, thereby preventing a large current from flowing to the inductor L2 before it happens.

The voltage between both end VL2 of the inductor L2 is detected, and the inclination di/dt of the current of the inductor L2 is calculated from a detected value and an inductance value L2 by the control circuit 6. According to an operation expression: VL2 = L2 x (di/dt), di/dt is equal to VL2/L2.

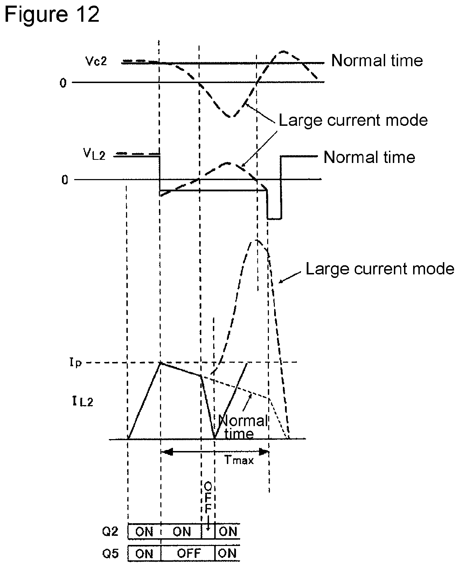

In the present embodiment, a predetermined threshold to be compared with the detected current inclination di/dt is set to 0 and, as shown in Fig. 12, when the current IL2 of the inductor L2 shifts from decrease to increase, the state is shifted to the whole OFF state. In other words, with a polarity where the switching element Q5 performs the chopping operation (high frequency operation), the state is shifted to the whole OFF state when the voltage between both end VL2 of the inductor L2 becomes substantially 0 or more, and with the polarity where the switching element Q4 performs the chopping operation (high frequency operation), the state is shifted to the whole OFF state when the voltage between both end VL2 of the inductor L2 becomes substantially 0 or less. Whereby, regeneration to the DC power source Vdc is started before a large current starts to flow to the inductor L2 and when the current falls within an allowable range.

Further, for example, as shown in Fig. 4, when the inclination di/dt of the current of the inductor L2 exceeds the predetermined threshold immediately after the switching element Q5 (or Q4) performing the high frequency operation is turned off, the switching element Q2 (or Q3) performing the low-frequency operation may be immediately turned off without waiting an increase to the second peak value Ip2.

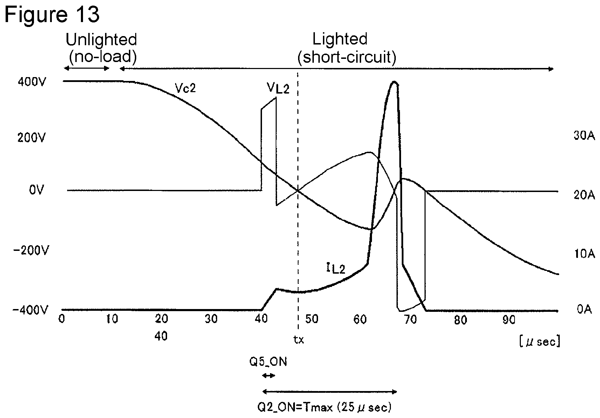

Fig. 13 illustrates a result obtained by reproducing the phenomenon that a large current flows to the inductor L2 at the switching operation of the switching element Q5 according to circuit simulation. At start of the simulation, the high-pressure discharge lamp DL is not lighted and the capacitor C2 connected to the high-pressure discharge lamp DL in parallel is charged to almost the same as that of the DC power source Vdc. After a lapse of 10 µs, the high-pressure discharge lamp DL is switched from an unlighted (no-load) state to a lighted (short-circuit) state and the voltage of the capacitor C2 starts to oscillate. After a lapse of 40 µs, the switching elements Q2, Q5 are turned on and the current IL2 starts to flow to the inductor L2. After a lapse of 43 µs, the switching element Q5 is turned off. After a lapse of 68 µs, the switching element Q2 is turned off.

The simulation result reveals that, at a time tx when the current IL2 of the inductor L2 starts to increase (inclination becomes 0), the voltage VL2 of the inductor L2 becomes 0. At the same time, the voltage Vc2 of the capacitor C2 also becomes 0. Thereafter, a large current having a peak at around 67 µs flows to the inductor L2. Therefore, by turning off the switching element Q2 at the time tx when the current IL2 of the inductor L2 starts to increase (inclination becomes 0) as in the present embodiment, the operation in which the current IL2 of the inductor L2 increases after the time tx can be prevented.

In the present embodiment, although means adapted to detect the inclination of the current of the inductor L2 is detection of the voltage between both end VL2 of the inductor L2, the voltage Vc2 of the capacitor C2 connected to the high-pressure discharge lamp DL substantially in parallel may be detected. With the polarity where the switching element Q5 performs the chopping operation (high frequency operation), the state may be shifted to the whole OFF state when the voltage Vc2 of the capacitor C2 becomes substantially 0 or less, and with the polarity where switching element Q4 performs the chopping operation (high frequency operation), the state may be shifted to the whole OFF state when the voltage Vc2 of the capacitor C2 becomes substantially 0 or more.

As described above, by shifting the state to the whole OFF state when the current IL2 of the inductor L2 starts to increase (the inclination of the current = 0), before a large current starts to flow to the inductor L2 and when the current IL2 falls within the allowable range, regeneration to the DC power source Vdc can be performed, thereby preventing the large current. As a result, the switching operation with minimum stresses to the switching elements and the inductor can be achieved.

### (Fifth embodiment)

Fig. 14 illustrates a configuration example of an illumination fixture using the high pressure discharge lamp lighting device of the present invention. (a), (b) each illustrate an example using an HID lamp as a spotlight and (c) illustrates an example using the HID lamp as a downlight. In these figures, DL denotes a high-pressure discharge lamp, 81 denotes a light body to which the high-pressure discharge lamp is attached, 82 denotes a wiring and 83 denotes a stabilizer that stores a circuit of the lighting device therein.

By mounting the above-mentioned high pressure discharge lamp lighting device as the lighting device, it is possible to provide an illumination apparatus, an illumination fixture and an illumination system that can prevent the current flowing to the inductor of the step-down chopper circuit, thereby avoiding breakdown of the high pressure discharge lamp lighting device, even when the high-pressure discharge lamp with unstable discharge is connected as a load.

### [Description of Reference Numerals]

3 : Full-bridge circuit
4 : Step-down chopper circuit
6 : Control circuit
C2 : Capacitor
L2 : Inductor
DL : High-pressure discharge lamp
Q2 to Q5 : Switching element

## Claims

1. A high pressure discharge lamp lighting device comprising:
first to fourth controllable switching elements (Q2, Q3, Q4, Q5) that form a full-bridge circuit, the full-bridge circuit receiving a voltage of a DC power source (Vdc); and a control circuit (6) that controls each of the switching elements (Q2, Q3, Q4, Q5), the first switching element (Q2) being serially connected to the second switching (Q3) element, the third switching element (Q4) being serially connected to the fourth switching element (Q5), the first switching element (Q2) and the third switching element (Q4) being connected to one end of the DC power source (Vdc), the second switching element (Q3) and the fourth switching element (Q5) being connected to the other end of the DC power source(Vdc), an output terminal capable of being connected in parallel to a high-pressure discharge lamp (DL) and an inductor (L2) being serially connected between a connection point of the first switching element (Q2) and the second switching element (Q3) and a connection point of the third switching element (Q4) and the fourth switching element (Q5), and a capacitor (C2) being connected to a terminal capable of being connected to the high-pressure discharge lamp (DL),
wherein:
the control circuit (6) performs a control operation of alternately switching between a first state and a second state at a first frequency (fa) in which,
in the first state, the second switching element (Q3) and the third switching element (Q4) are in an OFF state, the fourth switching element (Q5) is turned on/off at a second frequency (fb) higher than the first frequency (fa), and the first switching element (Q2) is in an ON state at least when the fourth switching element (Q5) is in the ON state,
in the second state, the first switching element (Q2) and the fourth switching element (Q5) are in the OFF state, the third switching element (Q4) is turned on/off at the second frequency (fb) higher than the first frequency (fa), and the second switching element (Q3) is in the ON state at least when the third switching element (Q4) is in the ON state;
**characterized in that** a maximum OFF time (Tmax) is predetermined, wherein in the first state the maximum OFF time (Tmax) starts with the fourth switching element (Q5) being either turned ON or OFF and at the end of the maximum OFF time (Tmax) the first switching element (Q2) is turned OFF, and wherein in the second state the maximum OFF time (Tmax) starts with the third switching element (Q4) being either turned ON or OFF and at the end of the maximum OFF time (Tmax) the second switching element (Q3) is turned OFF,
the control circuit (6) performs a control in the first state to turn off the first switching element (Q2) if a current (IL2) flowing to the inductor (L2) after turning off the fourth switching element (Q5) when the maximum OFF time (Tmax) has elapsed and to turn off the first switching element (Q2) if the current (IL2) flowing to the inductor (L2) has reached a predetermined value (Ip2) even though the the maximum OFF time (Tmax) has not elapsed; and
the control circuit (6) performs a control in the second state to turn off the second switching element (Q3) if the current (IL2) flowing to the inductor (L2) after turning off the third switching element (Q4) is not zero when the maximum OFF time (Tmax) has elapsed and to turn off the the second switching element (Q3) if the current (IL2) flowing to the inductor (L2) has reached a predetermined value (Ip2) even though the the maximum OFF time (Tmax) has not elapsed.

2. The high pressure discharge lamp lighting device according to claim 1, wherein the predetermined value (Ip) is equal to or smaller than a saturating current of the inductor (L2).

3. The high pressure discharge lamp lighting device according to claim 2, further comprising detecting means adapted to detect a current (IL2) flowing to the inductor (L2) or a value corresponding to this current (IL2).

4. The high pressure discharge lamp lighting device according to claim 3, wherein the detecting means is a current detecting resistor (R1).

5. The high pressure discharge lamp lighting device according to claim 3, wherein the detecting means is detection of a voltage between both ends of the first switching element (Q2) in the first state and detection of a voltage between both ends of the second switching element (Q3) in the second state.

6. The high pressure discharge lamp lighting device according to claim 3, wherein the detecting means is detection of a voltage between both ends of the third switching element (Q4) in the first state and detection of a voltage between both ends of the fourth switching element (Q5)in the second state.

7. The high pressure discharge lamp lighting device according to claim 1, wherein the control to turn off the first switching element (Q2) in the first state and the second switching element (Q3) in the second state according to the current (IL2) flowing to the inductor (L2) is performed when an inclination of the current (IL2) flowing to the inductor (L2) becomes equal to or larger than a predetermined value.

8. The high pressure discharge lamp lighting device according to claim 7, further comprising detecting means adapted to detect the inclination of the current (IL2) flowing to the inductor (L2) or a value corresponding to this current (IL2).

9. The high pressure discharge lamp lighting device according to claim 8, wherein the detecting means is detection of a voltage between both ends of the inductor (L2).

10. The high pressure discharge lamp lighting device according to claim 8, wherein the detecting means is detection of a voltage between both ends of a capacitor (C2) connected to an output terminal in parallel, the output terminal capable of being connected to the high-pressure discharge lamp (DL).

11. An illumination fixture comprising the high pressure discharge lamp lighting device according to any of claims 1 to 10.

## Patentansprüche

1. Hochdruckentladungslampenbeleuchtungsvorrichtung aufweisend:
erste bis vierte steuerbare Schaltelemente (Q2, Q3, Q4, Q5), die einen Vollbrückenschaltkreis bilden, wobei der Vollbrückenschaltkreis eine Spannung von einer Gleichspannungsleistungsquelle (Vdc) erhält; und einen Steuerschaltkreis (6), der jedes der Schaltelemente (Q2, Q3, Q4, Q5) steuert, wobei das erste Schaltelement (Q2) in Reihe zu einem zweiten Schaltelement (Q3) geschaltet ist, wobei das dritte Schaltelement (Q4) in Reihe zu einem vierten Schaltelement (Q5) geschaltet ist, wobei das erste Schaltelement (Q2) und das dritte Schaltelement (Q4) mit einem Ende der Gleichspannungsleistungsquelle (Vdc) verbunden sind, wobei das zweite Schaltelement (Q3) und das vierte Schaltelement (Q5) mit dem anderen Ende der Gleichspannungsleistungsquelle (Vdc) verbunden sind, wobei ein Ausgangsanschluss eingerichtet ist parallel zu der Hochdruckentladungslampe (DL) und einer in Reihe zwischen einen Verbindungspunkt des ersten Schaltelements (Q2) und des zweiten Schaltelements (Q3) und einen Verbindungspunkt des dritten Schaltelements (Q4) und des vierten Schaltelements (Q5) geschalteten Induktivität (L2) angeschlossen zu werden und wobei ein Kondensator (C2) mit einem Anschluss verbunden ist, der eingerichtet ist mit der Hochdruckentladungslampe (DL) verbunden zu werden, wobei:
der Steuerschaltkreis (6) einen Steuerbetrieb des abwechselnden Schaltens zwischen einem ersten Zustand und einem zweiten Zustand mit einer ersten Frequenz (fa) ausführt, bei dem,
im ersten Zustand, das zweite Schaltelement (Q3) und das dritte Schaltelement (Q4) in einem sperrenden Zustand sind, wobei das vierte Schaltelement (Q5) mit einer zweiten Frequenz (fb), die größer ist als die erste Frequenz (fa), leitend/sperrend geschaltet wird und das erste Schaltelement (Q2) in einem leitenden Zustand ist, zumindest wenn das vierte Schaltelement (Q5) im leitenden Zustand ist,
im zweiten Zustand, das erste Schaltelement (Q2) und das vierte Schaltelement (Q5) im sperrenden Zustand sind, wobei das dritte Schaltelement (Q4) bei der zweiten Frequenz (fb), die größer ist als die erste Frequenz (fa) leitend/sperrend geschaltet wird, und das zweite Schaltelement (Q3) im leitenden Zustand ist, zumindest wenn das dritte Schaltelement (Q4) im leitenden Zustand ist;
**dadurch gekennzeichnet, dass** eine maximale Sperrzeitdauer (Tmax) vorherbestimmt ist, wobei die maximale Sperrzeitdauer (Tmax) im ersten Zustand beginnt, wenn das vierte Schaltelement (Q5) entweder leitend oder sperrend geschaltet wird und das erste Schaltelement (Q2) am Ende der maximalen Sperrzeitdauer (Tmax) sperrend geschaltet wird, und wobei in dem zweiten Zustand die maximale Sperrzeitdauer (Tmax) beginnt, wenn das dritte Schaltelement (Q4) entweder leitend oder sperrend geschaltet wird und das zweite Schaltelement (Q3) am Ende der maximalen Sperrzeitdauer (Tmax) sperrend geschaltet wird,
wobei der Steuerschaltkreis (6) im ersten Zustand eine Steuerung ausführt, um das erste Schaltelement (Q2) sperrend zu schalten, wenn ein Strom zur Induktivität (L2) fließt nach dem Sperrendschalten des vierten Schaltelements (Q5), wenn die maximale Sperrzeitdauer (Tmax) abgelaufen ist, und um das erste Schaltelement (Q2) sperrend zu schalten, wenn der zu der Induktivität (L2) fließende Strom (IL2) einen vorherbestimmten Wert (Ip2) erreicht hat, auch wenn die maximale Sperrzeitdauer (Tmax) noch nicht abgelaufen ist; und
wobei der Steuerschaltkreis (6) in dem zweiten Zustand eine Steuerung ausführt, um das zweite Schaltelement (Q3) sperrend zu schalten, wenn der zur Induktivität (L2) fließende Strom (IL2) nach dem Sperrendschalten des dritten Schaltelements (Q4) nicht Null ist, wenn die maximale Sperrzeitdauer (Tmax) abgelaufen ist, und um das zweite Schaltelement (Q3) sperrend zu schalten, wenn der zu der Induktivität (L2) fließende Strom einen vorherbestimmten Wert (Ip2) erreicht hat, auch wenn die maximale Sperrzeitdauer (Tmax) noch nicht abgelaufen ist.

2. Hochdruckentladungslampenbeleuchtungsvorrichtung nach Anspruch 1, wobei der vorherbestimmte Wert (Ip) gleich ist oder kleiner als ein Sättigungsstrom der Induktivität (L2).

3. Hochdruckentladungslampenbeleuchtungsvorrichtung nach Anspruch 2, außerdem aufweisend ein Erfassungsmittel, das dazu eingerichtet sind, einen Strom (IL2), der durch die Induktivität (L2) fließt oder einen diesem Strom (IL2) entsprechenden Wert zu detektieren.

4. Hochdruckentladungslampenbeleuchtungsvorrichtung nach Anspruch 3, wobei das Erfassungsmittel ein Stromerfassungswiderstand (R1) ist.

5. Hochdruckentladungslampenbeleuchtungsvorrichtung nach Anspruch 3, wobei das Erfassungsmittel eine Erfassung einer Spannung zwischen beiden Enden des ersten Schaltelements (Q2) in dem ersten Zustand und eine Erfassung einer Spannung zwischen beiden Enden des zweiten Schaltelements (Q3) in dem zweiten Zustand ist.

6. Hochdruckentladungslampenbeleuchtungsvorrichtung nach Anspruch 3, wobei das Erfassungsmittel eine Erfassung einer Spannung zwischen beiden Enden des dritten Schaltelements (Q4) im ersten Zustand und eine Erfassung einer Spannung zwischen beiden Enden des vierten Schaltelements (Q5) im zweiten Zustand ist.

7. Hochdruckentladungslampenbeleuchtungsvorrichtung nach Anspruch 1, wobei die Steuerung zum Sperrendschalten des ersten Schaltelements (Q2) im ersten Zustand und des zweiten Schaltelements (Q3) im zweiten Zustand entsprechend dem zu der Induktivität (L2) fließenden Stroms (IL2) ausgeführt wird, wenn eine Steigung des Stroms (IL2), der zu der Induktivität (L2) fließt, gleich oder größer wird als ein vorherbestimmter Wert.

8. Hochdruckentladungslampenbeleuchtungsvorrichtung nach Anspruch 7, außerdem aufweisend ein Erfassungsmittel, das dazu eingerichtet ist, die Steigung des zur Induktivität (L2) fließenden Stroms (IL2) oder eines diesem Strom (IL2) entsprechenden Wertes zu erfassen.

9. Hochdruckentladungslampenbeleuchtungsvorrichtung nach Anspruch 8, wobei das Erfassungsmittel eine Erfassung einer Spannung zwischen beiden Enden der Induktivität (L2) ist.

10. Hochdruckentladungslampenbeleuchtungsvorrichtung nach Anspruch 8, wobei das Erfassungsmittel eine Erfassung einer Spannung zwischen beiden Enden eines Kondensators (C2) ist, der parallel zu einem Ausgangsanschluss geschaltet ist, wobei der Ausgangsanschluss eingerichtet ist mit der Hochdruckentladungslampe (DL) verbunden zu werden.

11. Beleuchtungshalterung aufweisend die Hochdruckentladungslampenbeleuchtungsvorrichtung nach irgendeinem der Ansprüche 1 bis 10.

## Revendications

1. Dispositif d'éclairage à lampe à décharge à haute pression comprenant :
un premier, un deuxième, un troisième et un quatrième élément de commutation réglable (Q2, Q3, Q4, Q5) qui forment un circuit en pont complet, le circuit en pont complet recevant une tension d'une source électrique continue (Vdc) ; et un circuit de commande (6) qui commande chacun des éléments de commutation (Q2, Q3, Q4, Q5), le premier élément de commutation (Q2) étant connecté en série au deuxième élément de commutation (Q3), le troisième élément de commutation (Q4) étant connecté en série au quatrième élément de commutation (Q5), le premier élément de commutation (Q2) et le troisième élément de commutation (Q4) étant connectés à une extrémité de la source électrique continue (Vdc), le deuxième élément de commutation (Q3) et le quatrième élément de commutation (Q5) étant connectés à l'autre extrémité de la source électrique continue (Vdc), une borne de sortie apte à être connectée en parallèle à une lampe à décharge à haute pression (DL) et une inductance (L2) étant connectées en série entre un point de connexion du premier élément de commutation (Q2) et du deuxième élément de commutation (Q3) et un point de connexion du troisième élément de commutation (Q4) et du quatrième élément de commutation (Q5), et un condensateur (C2) étant connecté à une borne apte à être connectée à la lampe à décharge à haute pression (DL), dans lequel :
le circuit de commande (6) réalise une opération de commande qui consiste à commuter alternativement entre un premier état et un deuxième état à une première fréquence (fa) dans laquelle,
dans le premier état, le deuxième élément de commutation (Q3) et le troisième élément de commutation (Q4) sont dans un état bloqué, le quatrième élément de commutation (Q5) est rendu passant/bloqué à une deuxième fréquence (fb) supérieure à la première fréquence (fa), et le premier élément de commutation (Q2) est dans un état passant au moins quand le quatrième élément de commutation (Q5) est dans l'état passant,
dans le deuxième état, le premier élément de commutation (Q2) et le quatrième élément de commutation (Q5) sont dans l'état bloqué, le troisième élément de commutation (Q4) est rendu passant/bloqué à la deuxième fréquence (fb) supérieure à la première fréquence (fa), et le deuxième élément de commutation (Q3) est dans l'état passant au moins quand le troisième élément de commutation (Q4) est dans l'état passant,
**caractérisé en ce qu'**un temps de blocage maximum (Tmax) est prédéterminé, dans lequel, dans le premier état, le temps de blocage maximum (Tmax) commence avec le quatrième élément de commutation (Q5) qui devient soit passant soit bloqué et à la fin du temps de blocage maximum (Tmax), le premier élément de commutation (Q2) est rendu bloqué, et dans lequel, dans le deuxième état, le temps de blocage maximum (Tmax) commence avec le troisième élément de commutation (Q4) qui devient soit passant soit bloqué et à la fin du temps de blocage maximum (Tmax), le deuxième élément de commutation (Q3) est rendu bloqué,
le circuit de commande (6) réalise une commande dans le premier état pour rendre le premier élément de commutation (Q2) bloqué si un courant (IL2) circulant vers l'inductance (L2) après le passage à l'état bloqué du quatrième élément de commutation (Q5) quand le temps de blocage maximum (Tmax) s'est écoulé et pour rendre le premier élément de commutation (Q2) bloqué si le courant (IL2) circulant vers l'inductance (L2) a atteint une valeur prédéterminée (Ip2) même si le temps de blocage maximum (Tmax) ne s'est pas écoulé ; et
le circuit de commande (6) réalise une commande dans le deuxième état pour rendre le deuxième élément de commutation (Q3) bloqué si le courant (IL2) circulant vers l'inductance (L2) après le passage à l'état bloqué du troisième élément de commutation (Q4) n'est pas nul quand le temps de blocage maximum (Tmax) s'est écoulé et pour rendre le deuxième élément de commutation (Q3) bloqué si le courant (IL2) circulant vers l'inductance (L2) a atteint une valeur prédéterminée (Ip2) même si le temps de blocage maximum (Tmax) ne s'est pas écoulé.

2. Dispositif d'éclairage à lampe à décharge à haute pression selon la revendication 1, dans lequel la valeur prédéterminée (Ip) est inférieure ou égale à un courant de saturation de l'inductance (L2).

3. Dispositif d'éclairage à lampe à décharge à haute pression selon la revendication 2, comprenant en outre un moyen de détection adapté pour détecter un courant (IL2) circulant vers l'inductance (L2) ou une valeur correspondant à ce courant (IL2).

4. Dispositif d'éclairage à lampe à décharge à haute pression selon la revendication 3, dans lequel le moyen de détection est une résistance de détection de courant (R1).

5. Dispositif d'éclairage à lampe à décharge à haute pression selon la revendication 3, dans lequel le moyen de détection est destiné à la détection d'une tension entre les deux extrémités du premier élément de commutation (Q2) dans le premier état et à la détection d'une tension entre les deux extrémités du deuxième élément de commutation (Q3) dans le deuxième état.

6. Dispositif d'éclairage à lampe à décharge à haute pression selon la revendication 3, dans lequel le moyen de détection est destiné à la détection d'une tension entre les deux extrémités du troisième élément de commutation (Q4) dans le premier état et à la détection d'une tension entre les deux extrémités du quatrième élément de commutation (Q5) dans le deuxième état.

7. Dispositif d'éclairage à lampe à décharge à haute pression selon la revendication 1, dans lequel la commande pour rendre bloqués le premier élément de commutation (Q2) dans le premier état et le deuxième élément de commutation (Q3) dans le deuxième état selon le courant (IL2) circulant vers l'inductance (L2) est réalisée quand une inclinaison du courant (IL2) circulant vers l'inductance (L2) devient supérieure ou égale à une valeur prédéterminée.

8. Dispositif d'éclairage à lampe à décharge à haute pression selon la revendication 7, comprenant en outre un moyen de détection adapté pour détecter l'inclinaison du courant (IL2) circulant vers l'inductance (L2) ou une valeur correspondant à ce courant (IL2).

9. Dispositif d'éclairage à lampe à décharge à haute pression selon la revendication 8, dans lequel le moyen de détection est destiné à la détection d'une tension entre les deux extrémités de l'inductance (L2).

10. Dispositif d'éclairage à lampe à décharge à haute pression selon la revendication 8, dans lequel le moyen de détection est destiné à la détection d'une tension entre les deux extrémités d'un condensateur (C2) connecté à une borne de sortie en parallèle, la borne de sortie étant apte à être connectée à la lampe à décharge à haute pression (DL).

11. Appareil d'éclairage comprenant le dispositif d'éclairage à lampe à décharge à haute pression selon l'une quelconque des revendications 1 à 10.
